# FASCICULE DE BREVET EUROPEEN

(11) **EP 4 308 448 B1**
(45) Date de publication et mention de la délivrance du brevet: **11.06.2025**
(21) Numéro de dépôt: 22715081.0
(22) Date de dépôt: 16.03.2022
(51) Int. Cl.: B63H 9/072

(54) **SYSTÈME DE TRACTION À AILE CAPTIVE ET PROCÉDÉ DE DÉPLACEMENT DES CHARRIOTS**
SCHLEPPSYSTEM MIT GEFANGENEM SEGEL UND VERFAHREN ZUR BEWEGUNG DER WAGEN
HAULING SYSTEM INVOLVING A CAPTIVE SAIL AND CART MOVEMENT PROCESS

(30) Priorité: 19.03.2021 FR 2102791
(43) Date de publication de la demande: 24.01.2024
(73) Titulaire: Kawasaki Kisen Kaisha Ltd, Tokyo 100-8540 (JP)
(72) Inventeur: VERFAILLIE, Swann, 31000 TOULOUSE (FR); FANTIN, Nicolas, 31140 LAUNAGUET (FR); JAN, Stéphane, 31450 MONTGISCARD (FR)
(74) Mandataire: Junca, Eric
(86) Numéro de dépôt international: PCT/EP2022/056811
(87) Numéro de publication internationale: WO 2022/194927

(56) Documents cités:
- DE-U1- 202016 006 694
- FR-A1- 3 082 184
- US-A1- 2007 157 868
- US-B1- 7 287 481

## Description

### DOMAINE TECHNIQUE

L'invention concerne le domaine des systèmes de traction à aile captive qui sont adaptés à déployer et replier une aile de traction par rapport à une plateforme de base, cette aile de traction étant adaptée à générer une force de traction sous l'effet du vent.

De tels systèmes de traction permettent le déploiement d'une aile de traction volante servant à la propulsion d'un véhicule, notamment un navire (en tant que mode de propulsion principal, ou à titre d'assistance), pour la production d'électricité, ou pour toute application tirant profit d'une telle force de traction.

### ART ANTÉRIEUR

La demande de brevet français FR3082184 décrit un système de traction à aile captive et un procédé de déploiement et de repli de l'aile de traction. L'aile de traction comporte des lignes de pliage fixées à son bord d'attaque, et le système comporte des moyens pour tirer au moins trois lignes de pliage afin de ramener le bord d'attaque contre le mât à au moins deux hauteurs différentes le long de ce mât.

Ce système de traction bénéficie d'un procédé de déploiement et de repli plus efficient et plus sûr.

### EXPOSÉ DE L'INVENTION

L'invention a pour but d'améliorer les systèmes de traction à aile captive de l'art antérieur, ainsi que les procédés de déploiement et de repli associés.

À cet effet, l'invention vise un système de traction à aile captive, comportant :
- une aile de traction adaptée à générer une force de traction sous l'effet du vent, cette aile de traction présentant un bord d'attaque et un bord de fuite ;
- une plateforme de base à laquelle l'aile de traction est reliée par l'intermédiaire d'une ligne de traction, l'aile de traction étant adaptée à être déployée et repliée par rapport à cette plateforme de base ;
- un mât d'arrimage pour l'aile de traction, disposé sur la plateforme de base ;
- plusieurs lignes de pliage ayant chacune une extrémité fixée au bord d'attaque de l'aile de traction, en étant espacées les unes des autres le long de ce bord d'attaque ;
- une ligne de ferlage reliée au bord de fuite de l'aile de traction.

Ce système de traction à aile captive comporte de plus :
- un charriot d'arrimage adapté à coulisser le long du mât d'arrimage et commandé par un actionneur de coulissement, ce charriot d'arrimage comportant une interface d'emboitement adaptée à maintenir arrimé le bord d'attaque de l'aile de traction ;
- un charriot de pliage adapté à coulisser le long du mât d'arrimage et commandé par un actionneur de coulissement, ce charriot de pliage comportant des moyens de saisie adaptés à saisir au moins une ligne de pliage ;
- un charriot de ferlage adapté à coulisser le long du mât d'arrimage et commandé par un actionneur de coulissement, ce charriot de ferlage comportant des moyens de saisie adaptés à saisir la ligne de ferlage ;
- un module de commande desdits actionneurs de coulissement, ce module de commande comportant au moins les deux modes de fonctionnement suivants : un mode de pliage dans lequel le charriot d'arrimage et le charriot de pliage sont éloignés l'un de l'autre ; un mode de ferlage dans lequel le charriot de ferlage et le charriot d'arrimage sont éloignées l'un de l'autre.

Selon un autre objet, l'invention vise un procédé de repli de l'aile de traction d'un système de traction tel que décrit ci-dessus, ce procédé comportant les étapes suivantes :
- arrimage du bord d'attaque de l'aile de traction sur le charriot d'arrimage ;
- saisie d'au moins une ligne de pliage par le charriot de pliage ;
- coulissement du charriot de pliage vers le bas tandis que le charriot d'arrimage reste fixe sur le mât d'arrimage ;
- saisie de la ligne de ferlage par le charriot de ferlage ;
- coulissement du charriot d'arrimage vers le bas tandis que le charriot de ferlage reste fixe sur le mât d'arrimage.

Selon un autre objet, l'invention vise un procédé de déploiement de l'aile de traction d'un système de traction tel que décrit ci-dessus, ce procédé comportant les étapes suivantes :
- coulissement du charriot d'arrimage vers le haut tandis que le charriot de ferlage est maintenu fixe sur le mât d'arrimage ;
- coulissement du charriot de pliage vers le haut tandis que le charriot d'arrimage est maintenu fixe sur le mât d'arrimage.

Dans tout le texte, les termes « un » ou « une » dans les formulations « un charriot », et « une ligne » sont à comprendre comme « au moins un » ou « au moins une ».

L'interface d'emboitement est ici adaptée à maintenir arrimé le bort d'attaque de l'aile de traction, que ce soit directement, ou indirectement par l'intermédiaire d'une pièce.

Aussi bien pour le repli de l'aile de traction que pour son déploiement, un tel système de traction à aile captive, et les procédés associés, mettent en œuvre des opérations de pliage/dépliage et de ferlage/déferlage de l'aile de traction qui sont uniquement contrôlées par la cinématique de translation des charriots d'arrimage, de pliage, et de ferlage.

Aucun dispositif complexe n'est nécessaire pour ces fonctions avancées de pliage/dépliage et de ferlage/déferlage, à la différence de l'art antérieur qui prévoit généralement des treuils, des enrouleurs, des poulies de renvoi, etc., pour ces mêmes fonctions. Ces fonctions sont ainsi entièrement automatisées sans éléments supplémentaires en dehors des actionneurs de coulissements et du module de commande.

Par ailleurs, la cinématique de translation des charriots peut également être mise à profit pour le stockage/déstockage de l'aile de traction avant ou après son pliage et son ferlage.

Les opérations de pliage, de ferlage et éventuellement de stockage de l'aile de traction sont ainsi imbriquées par le jeu des charriots. Ces fonctions sont réalisées avec peu de matériel mobile (peu de lignes, peu de renvois, et peu d'éléments mobiles). Pourtant, ces fonctions présentent une grande complexité de réalisation, notamment pour la réalisation des enroulements de lignes de façon ordonnée et répétitive surtout quand la tension n'est pas parfaitement maitrisée. Le recours à des dispositifs complexes de trancanage, de tensionneurs, etc. sont fréquemment utilisés.

Ces opérations sont cependant accélérées par rapport à l'art antérieur grâce à l'imbrication des fonctions. Notamment, le repli de l'aile de traction en cas d'augmentation rapide de la vitesse du vent, est rapide et fluide et l'aile de traction est rapidement placée dans une situation (pliée et ferlée) où elle est à l'abri du vent.

Le système de traction à aile captive selon l'invention peut comporter les caractéristiques additionnelles suivantes, seules ou en combinaison :
- dans le mode de pliage, le charriot d'arrimage est maintenu fixe sur le mât d'arrimage et le charriot de pliage coulisse vers le bas ;
- dans le mode de ferlage, le charriot de ferlage est maintenu fixe sur le mât d'arrimage et le charriot d'arrimage coulisse vers le bas ;
- dans le mode de ferlage, le charriot de ferlage coulisse vers le haut, et le charriot d'arrimage est maintenu fixe sur le mât d'arrimage ;
- dans le mode de ferlage, le charriot de pliage coulisse également vers le bas, l'écart entre le charriot d'arrimage et le charriot de pliage étant maintenu constant ;
- le module de commande comporte de plus le mode de fonctionnement suivant : un mode de déferlage dans lequel le charriot de ferlage et le charriot d'arrimage sont rapprochés l'un de l'autre ;
- dans le mode de déferlage, le charriot de ferlage est maintenu fixe sur le mât d'arrimage et le charriot d'arrimage coulisse vers le haut ;
- le module de commande comporte de plus le mode de fonctionnement suivant : un mode de dépliage dans lequel le charriot d'arrimage et le charriot de pliage sont rapprochés l'un de l'autre ;
- dans le mode de dépliage, le charriot d'arrimage est maintenu fixe sur le mât d'arrimage et le charriot de pliage coulisse vers le haut ;
- le module de commande comporte de plus le mode de fonctionnement suivant : un mode de stockage dans lequel l'écart entre le charriot de ferlage et le charriot d'arrimage est maintenu constant, tandis que le charriot d'arrimage et le charriot de pliage sont rapprochés l'un de l'autre ;
- dans le mode de stockage, le charriot de ferlage et le charriot d'arrimage coulissent vers le bas en maintenant constant leur écart mutuel, et le charriot de pliage coulisse vers le bas à une vitesse inférieure à la vitesse de coulissement du charriot d'arrimage ;
- dans le mode de stockage, le charriot de pliage est maintenu fixe ;
- le module de commande comporte de plus le mode de fonctionnement suivant : un mode de déstockage dans lequel l'écart entre le charriot de ferlage et le charriot d'arrimage est maintenu constant, tandis que le charriot d'arrimage et le charriot de pliage sont éloignés l'un de l'autre ;
- dans le mode de déstockage, le charriot de ferlage et le charriot d'arrimage coulissent vers le haut en maintenant constant leur écart mutuel, et le charriot de pliage coulisse vers le haut à une vitesse inférieure à la vitesse de coulissement du charriot d'arrimage ;
- le système comporte un dispositif de saisie de lignes qui est relié au bord d'attaque de l'aile de traction et qui est adapté à s'accoupler avec l'interface d'emboitement du charriot d'arrimage, le charriot de ferlage étant adapté à saisir la ligne de ferlage sur le dispositif de saisie de lignes, et le charriot de pliage étant adapté à saisir au moins une ligne de pliage sur le dispositif de saisie de lignes ;
- le système comporte une ligne d'arrimage de l'aile de traction sur l'interface d'emboitement du charriot d'arrimage, la longueur de cette ligne d'arrimage étant commandée par le module de commande de sorte que la ligne d'arrimage soit maintenue en tension durant le mode de ferlage et le mode de pliage ;
- la longueur de la ligne d'arrimage est commandée par le module de commande de sorte que la ligne d'arrimage soit maintenue en tension également durant le mode de stockage ;
- le charriot de pliage comporte des moyens de saisie qui sont adaptés à saisir de manière coulissante au moins une ligne de pliage ;
- le charriot de pliage comporte des moyens de saisie qui sont adaptés à saisir de manière coulissante au moins une ligne de fermeture du bord de fuite de l'aile de traction ;
- le charriot de ferlage comportant des moyens de saisie qui sont adaptés à saisir de manière coulissante la ligne de ferlage ;
- le charriot de ferlage est adapté à saisir la lige de ferlage au niveau d'une boucle qui, lorsqu'elle subit une traction, entraine une traction sur la ligne de ferlage.

### PRÉSENTATION DES FIGURES

D'autres caractéristiques et avantages de l'invention ressortiront de la description non limitative qui suit, en référence aux dessins annexés dans lesquels :
- la figure 1 est une vue en perspective d'un système de traction selon l'invention ;
- la figure 2 illustre le système de traction vu de côté ;
- la figure 3 représente l'aile de traction du système de traction des figures 1 et 2, vue de face ;
- la figure 4 représente le système de traction vu de côté, durant une phase de repli de l'aile de traction ;
- la figure 5 est une vue en perspective partielle de l'aile de traction en cours de repli ;
- la figure 6 représente le système de traction vu de côté, l'aile de traction étant pliée le long du mât d'arrimage ;
- la figure 7 illustre en perspective l'aile de traction pliée le long du mât d'arrimage ;
- la figure 8 est une vue agrandie de l'aile de traction montrant un dispositif de saisie qui est relié au bord d'attaque de l'aile de traction ;
- la figure 9 est une vue de côté du dispositif de saisie ;
- la figure 10 représente le dispositif de saisie et les charriots du système de traction durant une étape du repli de l'aile de traction ;
- la figure 11 représente le dispositif de saisie et les charriots du système de traction durant une autre étape du repli de l'aile de traction ;
- la figure 12, la figure 13, la figure 14, la figure 15, la figure 16, et la figure 17 sont des vues de côté du système de traction et illustrent des étapes successives du procédé de repli de l'aile de traction.

Les éléments similaires et communs aux divers modes de réalisation portent les mêmes numéros de renvoi aux figures.

### DESCRIPTION DÉTAILLÉE

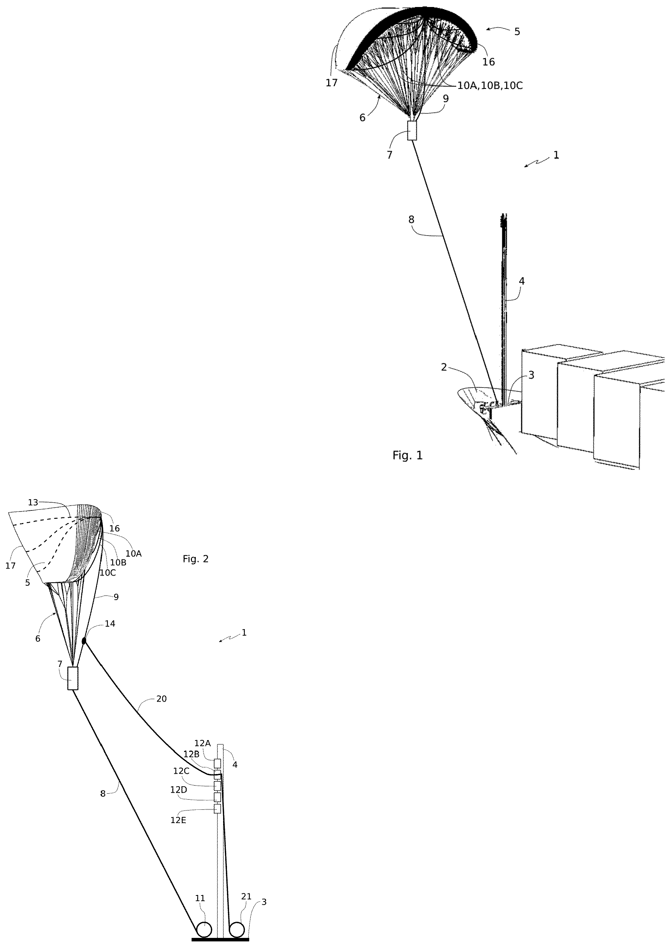

La figure 1 illustre un système de traction 1 à aile captive, monté sur un navire 2 qui est, dans cet exemple, un navire de fret maritime (sur la figure 1, seul l'avant du navire a été représenté).

Dans le présent exemple, le système de traction 1 est monté à la proue du navire 2 et est actionné comme un moyen complémentaire de propulsion du navire permettant une économie de carburant. Dans ce contexte, le système de traction 1 est dimensionné selon le tonnage du navire à tracter et est prévu pour être déployé et replié de manière automatique.

En variante, ce système de traction 1 peut être utilisé pour toute autre application où un tel système de traction déployable et repliable automatiquement est souhaité, par exemple comme moyen principal de propulsion d'un navire, pour la propulsion de tout autre véhicule, pour la production d'électricité, etc.

Le système de traction 1 comporte une plateforme de base 3 qui est ici fixée sur le pont du navire 2 et sur laquelle est monté un mât d'arrimage 4 prévu pour les opérations de déploiement et de repli automatiques du système.

Le système de traction 1 comporte de plus une aile de traction 5 qui est adaptée à générer une force de traction sous l'effet du vent. Dans le présent exemple, l'aile de traction 5 est une voile de type parapente. Tout autre équipement volant adapté à générer une force de traction sous l'effet du vent peut alternativement être employé, tels que cerfs-volants, équipements de vol à voile, voiles de type « kite » (en anglais), etc. L'aile de traction 5 comporte, de manière classique, un bord d'attaque 16 destiné à être exposé au vent incident et un bord opposé, dit bord de fuite 17.

L'aile de traction 5 est reliée par un ensemble de lignes de suspente 6 à un dispositif volant de commande de trajectoire 7 qui est adapté à agir sur les lignes de suspentes 6 pour piloter le vol de l'aile de traction 5.

Le système de traction 1 comporte de plus une ligne de traction 8 reliant le dispositif volant de commande de trajectoire 7 à la plateforme de base 3. La force de traction générée par l'aile de traction 5 est transmise par la ligne de traction 8 au navire 2 pour sa propulsion, et la ligne de traction est dimensionnée en conséquence. Dans le cadre de la traction d'un navire de fret maritime, la ligne de traction peut être par exemple un câble textile dont le diamètre peut atteindre plusieurs centimètres.

Le dispositif volant de commande de trajectoire 7 permet de piloter le vol de l'aile de traction 5 afin d'orienter et de positionner l'aile de traction et éventuellement d'entrainer l'aile de traction 5 à décrire des figures de vol permettant d'augmenter la force de traction sur le navire. Le contrôle de la trajectoire de l'aile de traction 5 est ici obtenu en commandant la longueur de certaines lignes de suspente mobiles, de manière classique dans le domaine des ailes volantes. L'ensemble des lignes de suspente 6 comporte en effet des lignes de suspente fixes (c'est-à-dire qui présente une longueur fixe entre leur rattachement à l'aile de traction 5 et leur rattachement au dispositif volant de commande de trajectoire 7), et des lignes de suspente mobiles dont la longueur est variable. Le dispositif volant de commande de trajectoire 7 est ainsi adapté à tirer sur certaines lignes de suspente mobiles et/ou à relâcher d'autres lignes de suspente mobiles, de sorte que le profil aérodynamique de l'aile de traction 5 est modifié en vue de contrôler sa portance, sa trajectoire, etc. La modification du profil d'une aile de traction pour la commande de sa trajectoire est réalisée de manière classique et ne sera pas décrite plus en détail ici.

L'aile de traction 5 comporte de plus une ligne guide 9 et plusieurs lignes de pliage 10A,10B,10C qui sont toutes solidaires du bord d'attaque 16, par au moins l'une de leurs extrémités.

La figure 2 est une vue de profil du système de traction 1 en phase de traction du navire, comme sur la figure 1. La figure 2 illustre de plus schématiquement des éléments constitutifs du système de traction 1.

La ligne de traction 8 est reliée à la plateforme de base 3 par l'intermédiaire d'un treuil 11 commandé par un moteur, par exemple électrique ou hydraulique, adapté à dérouler la ligne de traction 8 pour permettre à l'aile de traction 5 de prendre de l'altitude, ou au contraire d'enrouler cette ligne de traction 8 pour ramener l'aile de traction 5 vers la plateforme de base 3.

Les figures 1 et 2 illustrent le système de traction 1 dans une configuration de traction, l'aile de traction 5 étant déployée et en vol, et le système participant à la propulsion du navire.

L'aile de traction 5 comporte une ligne de ferlage 13 qui se divise en plusieurs lignes (représentées en pointillés sur la figure 2) dont les extrémités sont reliées au bord de fuite 17 de l'aile 5. Cette ligne de ferlage 13 peut être saisie au niveau du bord de fuite 16 de l'aile de traction 5, et une traction sur cette ligne de ferlage 13 entraine le ferlage par compression de l'aile 5 dans le but de la ranger.

Le système de traction 1 comporte des charriots 12A, 12B, 12C, 12D, 12E qui sont au nombre de cinq dans le présent exemple. Ces charriots sont fixés de manière coulissante sur le mât d'arrimage 4 et comportent chacun une motorisation de sorte que la position de chaque charriot le long du mât d'arrimage 4 peut être pilotée. Ces charriots sont prévus pour saisir et guider les lignes de pliage 10A, 10B, 10C et la ligne de ferlage 13 durant les phases de déploiement ou de repli décrites plus loin.

Ces charriots sont agencés comme suit :
- le charriot 12A est un charriot de ferlage et est conçu pour saisir la ligne de ferlage 13 ;
- le charriot 12B est un charriot d'arrimage et est conçu pour assurer l'arrimage du bord d'attaque 16 de l'aile de traction 5 ;
- le charriot 12C est un premier charriot de pliage et est conçu pour saisir la première paire de lignes de pliage 10A ;
- le charriot 12D est un deuxième charriot de pliage et est conçu pour saisir la deuxième paire de lignes de pliage 10B ;
- le charriot 12E est un troisième charriot de pliage et est conçu pour saisir la troisième paire de lignes de pliage 10C.

En variante, le système de traction 1 comporte autant de charriots que nécessaires pour saisir les lignes de pliage ou de ferlage, dont le nombre peut varier par rapport à l'exemple décrit.

Le système de traction 1 comporte de plus un module de commande 64 qui commande le mouvement des charriots 12A, 12B, 12C, 12D, 12E ainsi que les dispositifs de chacun des charriots permettant de saisir les lignes de pliage ou de ferlage. Ce module de commande 64 est réalisé de manière classique par du matériel électronique et informatique adapté à cette application, et programmé pour mettre en œuvre notamment le procédé de déploiement et de repli de l'aile de traction 5.

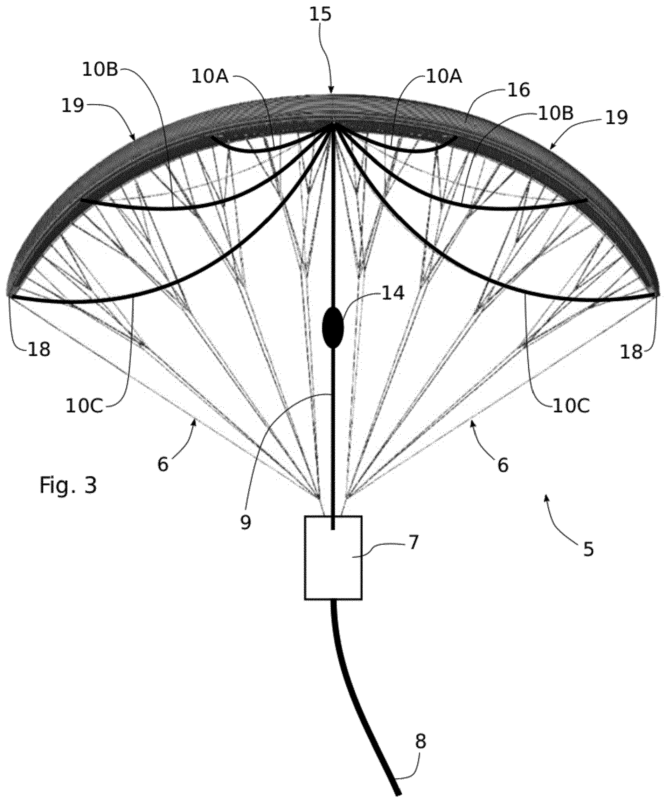

Les lignes de pliage 10A, 10B, 10C sont agencées par paire comme illustré à la figure 3. Le bord d'attaque 16 de l'aile de traction 5 est, dans la présente description, divisé en une zone médiane 15 et en deux bords latéraux 19 s'étendant de part et d'autre de cette zone médiane 15, entre la zone médiane 15 et chacune des extrémités latérales 18 du bord d'attaque 16.

Sur cette figure 3, la vue de face de l'aile de traction 5 illustre le cheminement des lignes de pliage 10A, 10B, 10C et leur agencement par rapport au bord d'attaque 16 :
- une première paire de lignes de pliage 10A comporte deux lignes chacune présentant une première extrémité reliée au niveau de la zone médiane 15 du bord d'attaque 16, et une deuxième extrémité qui est directement reliée au bord d'attaque 16, à une certaine distance de la zone médiane 15, sur l'une des portions latérales 19 du bord d'attaque 16 ;
- une deuxième paire de lignes de pliage 10B comporte deux lignes chacune présentant une première extrémité reliée au niveau de la zone médiane 15, et une deuxième extrémité directement reliée au bord d'attaque 16, sur l'une des portions latérales 19, et dans cet exemple approximativement au milieu de chaque portion latérale 19, c'est-à-dire approximativement à mi-chemin entre la zone latérale 15 et l'extrémité latérale 18 ;
- une troisième paire de lignes de pliage 10C comporte deux lignes reliant chacune la zone médiane 15 à une portion du bord d'attaque 16 qui est à proximité de l'extrémité latérale 18.

La figure 3 illustre également le cheminement de la ligne guide 9 entre la portion centrale 15 et le dispositif volant de commande de trajectoire 7.

En référence de nouveau à la figure 2, le système de traction 1 comporte une ligne d'arrimage 20 qui est enroulée sur un treuil d'arrimage 21 monté sur la plate-forme de base 3. La ligne d'arrimage 20 part du treuil 21 et est ensuite guidée dans le charriot d'arrimage 12B par une ou plusieurs poulies (ou par des éléments à faible friction, ou tout autre élément permettant de faire cheminer de manière coulissante la ligne d'arrimage 20 dans le charriot d'arrimage 12B). La ligne d'arrimage 20 passe ensuite dans une navette 14 qui est coulissante le long de la ligne guide 9.

À partir de la configuration de traction des figures 1 et 2, l'aile de traction 5 peut être repliée selon le procédé décrit ci-après.

À partir des positions des figures 1 et 2, les treuils 11 et 21 sont d'abord commandés pour ramener la ligne de traction 8 et la ligne d'arrimage 20 de sorte que le dispositif volant de commande de trajectoire 7 vienne se poser sur la plate-forme de base 3, tandis que la navette 14 remonte le long de la ligne guide 9 au fur et à mesure de la descente de l'aile de traction 5.

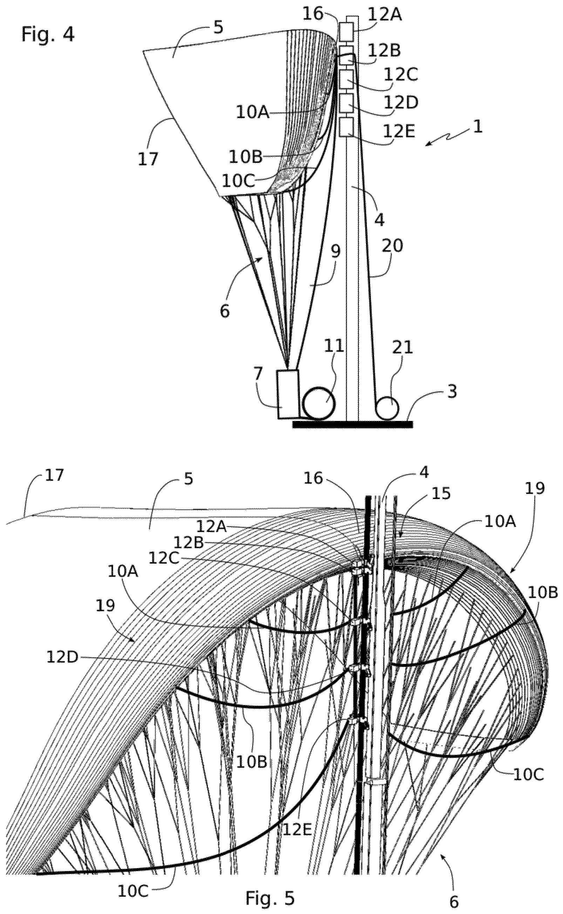

Cette opération se poursuit jusqu'à la position de la figure 4 dans laquelle :
- le dispositif volant de commande de trajectoire 7 est posé par rapport à la plateforme de base 3, par exemple sur un support adapté (non représenté) ;
- la navette 14 a coulissé vers le haut, sur toute la longueur de la ligne guide 9, jusqu'à son extrémité qui est à proximité de la zone médiane 15.

La ligne d'arrimage 20 passe dans le charriot d'arrimage 12B et maintient le bord d'attaque 16 par traction contre le charriot d'arrimage 12B. L'aile de traction 5 est ensuite bloquée dans cette position arrimée (comme décrit plus loin), la tension sur la ligne d'arrimage 20 n'est plus nécessaire, et la saisie des lignes peut avoir lieu.

Pour réaliser la saisie des lignes (ces opérations n'ont pas forcément lieu dans cet ordre) :
- le charriot de ferlage 12A saisit la ligne de ferlage 13 ;
- le premier charriot de pliage 12C saisit la première paire de lignes de pliage 10A ;
- le deuxième charriot de pliage 12D saisit la deuxième paire de lignes de pliage 10B ;
- le troisième charriot de pliage 12E saisit la troisième paire de lignes de pliage 10C.

Les saisies de lignes sont réalisées grâce à des crochets sur les charriots, ainsi qu'un dispositif de saisie, comme exposé plus loin.

Les charriots de pliage 12C, 12D, 12E entament ensuite un mouvement de descente le long du mât d'arrimage 4 en coulissant leurs crochets le long des lignes qui ont été crochetées.

La figure 5 est une vue en perspective illustrant cette opération de descente des charriots de pliage. Chacun des charriots de pliage 12C, 12D, 12E entraine ainsi chacune des lignes de pliage progressivement vers une configuration où les lignes sont tendues verticalement depuis la zone médiane 15 (qui est arrimée au charriot d'arrimage 12B qui reste fixe), le long du mât d'arrimage 4. Cette opération permet de ramener les portions latérales 19 verticalement le long du mât d'arrimage 4.

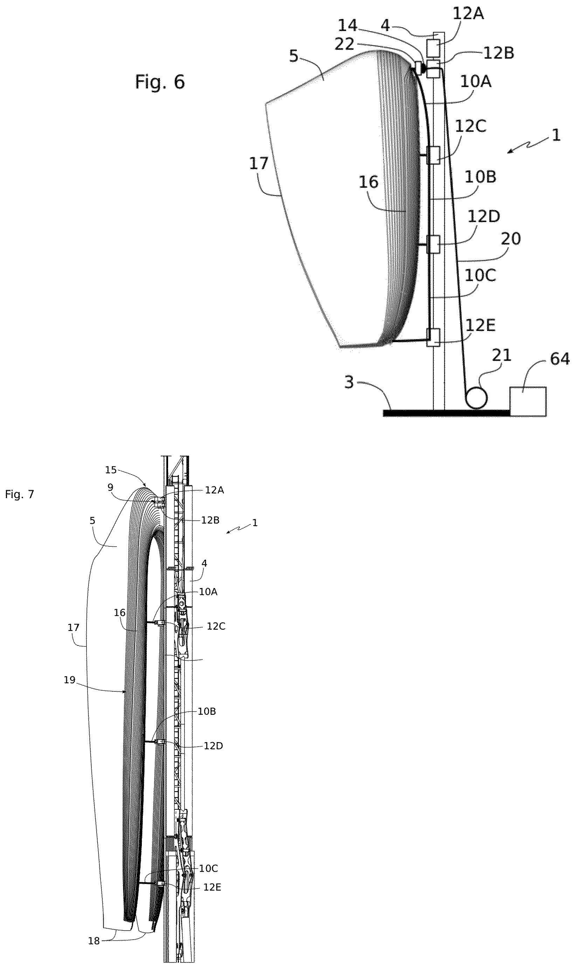

Les figures 6 (vue de côté) et 7 (vue en perspective) illustrent l'aile de traction 5 après cette opération de pliage, c'est-à-dire lorsque les charriots de pliage 12C, 12D, 12E sont chacun dans leur position basse respective.

L'aile de traction 5 est alors repliée le long du mât d'arrimage 4, c'est-à-dire que les deux portions latérales 19 du bord d'attaque 16 s'étendent verticalement le long du mât d'arrimage 4, tandis que la zone médiane 15 est maintenue arrimée contre le charriot d'arrimage 12B.

À partir de cette position des figures 6 et 7, l'aile 5 peut alors être ferlée. Le charriot de ferlage 12A (qui a saisi la ligne de ferlage 13) est alors commandé pour coulisser vers le haut le long du mât d'arrimage 4, et exerce ainsi une traction sur la ligne de ferlage 13, ce qui entraine le ferlage de l'aile de traction 5. Dans le présent exemple, le ferlage se fait par compression, en rapprochant le bord de fuite 17 du bord d'attaque 16.

En référence à la figure 6, l'arrimage de l'aile de traction 5 par rapport au charriot d'arrimage 12B est réalisé par la coopération de la ligne d'arrimage 20, du charriot d'arrimage 12B, de la navette 14, et d'un dispositif de saisie de lignes 22.

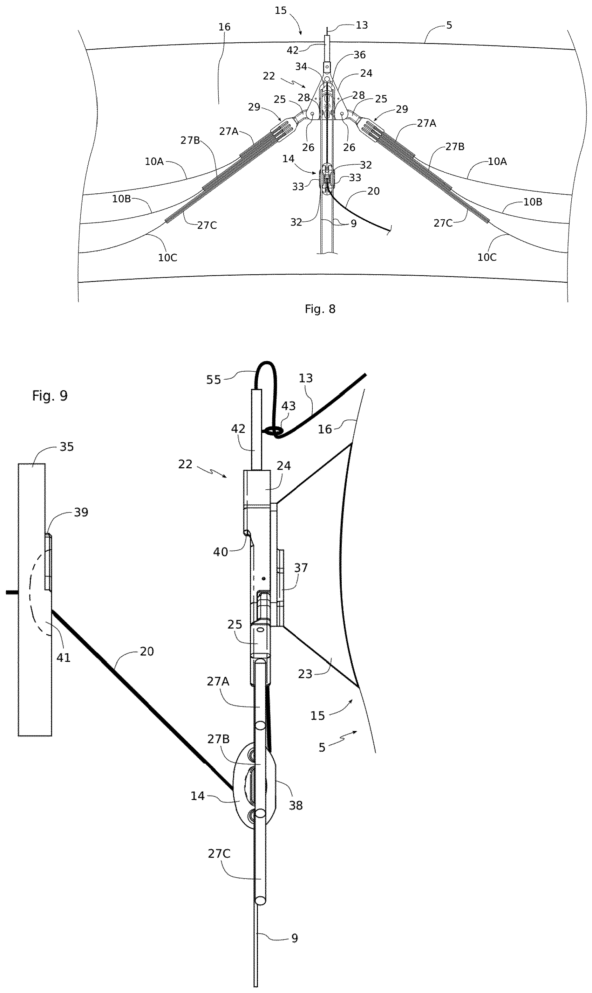

La figure 8 est une vue de détail de la figure 3, illustrant l'aile de traction 5 vue de face et montrant la zone médiane 15, et le rattachement des lignes de pliage 10A, 10B, 10C et de la ligne de ferlage 13 à la zone médiane 15 du bord d'attaque 16, par l'intermédiaire du dispositif de saisie 22.

Le dispositif de saisie 22 est relié au bord d'attaque 16 de l'aile de traction 5, au niveau de la zone médiane 15, par un pylône 23 (visible notamment sur la vue de côté de la figure 9). Le pylône 23 est ainsi dénommé par analogie avec le pylône d'un avion, c'est-à-dire le mât réacteur, en termes aéronautiques. Le pylône 23 est de préférence réalisé par une nervure de matériau léger et résistant tel qu'un matériau composite à fibres de carbone. Le pylône 23 est fixé sur le dispositif de saisie 22 et sur un renfort cousu sur le bord d'attaque 16 de l'aile de traction 5.

Le dispositif de saisie 22 peut, en variante, être relié par tout autre moyen, souple ou rigide, au bord d'attaque 16, tel que des liens textiles ou tout autre élément permettant de faire en sorte qu'une traction sur le dispositif de saisie 22 entraine une traction sur le bord d'attaque 16.

Le dispositif de saisie 22 comporte un corps 24 et deux bras d'accrochage 25, montés pivotant sur ce corps 24, chacun autour d'un axe 26. Chacun des bras d'accrochage 25 comporte une première tige d'accrochage 27A, une deuxième tige d'accrochage 27B de longueur supérieure, et une troisième tige d'accrochage 27C de longueur encore supérieure (les tiges d'accrochage 27A, 27B, 27C sont vues en coupe sur la figure 8). Cette disposition dans laquelle les tiges d'accrochage juxtaposées présentent une longueur qui va croissante, ou décroissante, est ici dénommée « en escalier ».

Dans le présent exemple, les tiges d'accrochage 27A, 27B, 27C sont constituées par des tubes emmanchés en force dans des alésages prévus à cet effet du bras d'accrochage 25.

Les bras d'accrochage sont mobiles par rapport au corps 24, entre une position de vol (celle de la figure 8) et une position d'accrochage dans laquelle les tiges d'accrochage 27A, 27B, 27C sont disposées sensiblement verticalement (lorsque l'aile de traction 5 est dans sa position normale d'arrimage).

Chaque bras d'accrochage 25 comporte de plus un levier 28, c'est-à-dire une portion s'étendant au-delà de l'axe 26 et permettant d'agir sur le bras d'accrochage 25 pour le replier.

Chaque ligne de pliage 10A, 10B, 10D, 10C qui rejoint la zone médiane 15 est reliée à une tige d'accrochage 27A, 27B, 27C de sorte à être saillante dans le prolongement de cette tige d'accrochage. Autrement dit, l'extrémité de la tige d'accrochage se prolonge par la ligne de pliage.

Dans le présent exemple, où les tiges d'accrochage sont réalisées par des tubes, la ligne de pliage est avantageusement insérée dans le tube, traverse tout le tube, jusqu'à une zone de fixation 29 du bras d'accrochage 25.

La liaison pivot entre les bras d'accrochage 25 et le corps 24 permet au bras d'accrochage 25 de prendre naturellement la position d'écartement illustrée à la figure 8 durant le vol de l'aile de traction 5, les bras d'accrochage 25 suivant ainsi l'ouverture dictée par les lignes de pliage 10A, 10B, 10C qui s'étendent en direction de leur autre extrémité reliée plus loin sur le bord d'attaque 16. Le dispositif de saisie 22 peut, en supplément, comporter un élément élastique (ressort ou autre) sollicitant les bras d'accrochage 25 vers leur position d'écartement de la figure 8.

Cette position d'écartement des bras d'accrochage 25 a pour fonction de sécuriser encore l'accrochage automatique des lignes, en limitant les risques d'emmêlement des bras d'accrochage 25 et des tiges d'accrochage 27A, 27B, 27C avec les autres lignes telles que la ligne guide 9 et la ligne d'arrimage 20.

La navette 14 est également représentée en coupe sur la figure 8. La navette 14 comporte deux orifices de coulissement 32, et est ici de forme oblongue avec deux méplats latéraux 33. La forme oblongue de la navette 14 permet un guidage et une orientation angulaire autour d'un axe horizontal du dispositif de saisie 22.

La ligne guide 9 est ici constituée par une paire de lignes tendues entre le corps 24 et le dispositif volant de commande de trajectoire 7. Dans le présent exemple, la paire de lignes guides 9 forme une boucle autour d'une butée 34 du corps 24.

La ligne guide 9 est ainsi rattachée à zone médiane 15 par l'intermédiaire du dispositif de saisie 22.

La ligne d'arrimage 20 passe à travers la navette 14 et est reliée au corps 24. La navette 14 comporte un moyen de guidage traversé par la ligne d'arrimage 20 et permettant le libre coulissement de la ligne d'arrimage 20. Ce moyen de guidage est réalisé par tout type de moyen de guidage, tels que poulies ou éléments à faible friction. La ligne d'arrimage 20 s'étend ainsi en provenance du charriot d'arrimage 12B, traverse la navette 14 de manière coulissante, en étant guidée en direction du corps 24.

La figure 9 illustre le dispositif de saisie 22 vu de côté et disposé en vis-à-vis d'une interface d'emboitement 35 qui est fixée sur le charriot d'arrimage 12B (le reste du charriot d'arrimage 12B n'a pas été représenté).

L'interface d'emboitement 35 comporte des éléments permettant l'arrimage du dispositif de saisie 22 dans une position prédéfinie. Dans le présent exemple, ces éléments comportent un décrochement 39 qui est complémentaire d'un décrochement 40 du corps 24. La navette 14 fait également partie de ces éléments de positionnement, car elle est prévue pour s'engager dans une empreinte 41 de l'interface d'emboitement 35. Le décrochement 40 présente de plus un important avantage en matière de reprise d'efforts, car la coopération des décrochements 39 et 40 permet de reprendre l'ensemble des efforts verticaux qui vont s'exercer sur le dispositif de saisie 22 lors des opérations de pliage, ces efforts pouvant être supérieurs à 15 kN.

L'empreinte 41 comporte des parois internes permettant de recevoir et de positionner la navette 14. La forme ovoïde de la navette 14, et son complément dans la forme de l'empreinte 41, garantissent le positionnement prédéfini, lors de l'arrimage du dispositif de saisie 22 sur l'interface d'emboitement 35.

La figure 9 illustre également l'agencement de la ligne de ferlage 13. Le dispositif de saisie 22 comporte une tige de ferlage 42 saillante verticalement par le dessus du corps 24. La ligne de ferlage 13 est saillante dans le prolongement de la tige de ferlage 24. Dans le présent exemple, la tige de ferlage 42 est réalisée par un tube emmanché dans le corps 24, la ligne de ferlage passant dans ce tube et son extrémité étant fixée sur le corps 24.

Entre son rattachement à la tige de ferlage 42 et son parcours en direction du bord de fuite 17, la ligne de ferlage 13 forme une boucle 55 et passe dans un anneau 43 qui est solidaire du tube 42. L'anneau 43 est par exemple un anneau à faible friction, ou peut être réalisé par un tube ou une poulie. Une traction sur la boucle 55 entraine ainsi une traction sur la ligne de ferlage 13 et donc le ferlage de l'aile de traction 5.

Par ailleurs, la traction sur la ligne d'arrimage 20, durant la phase d'arrimage de l'aile de traction, provoque la remontée de la navette 14 et se conclut par l'entrée de la navette 14 dans le logement 36. La navette 14 est alors immobilisée dans le logement 36, grâce à l'ajustement dimensionnel permettant l'appui plan sur plan des méplats 33, 38 contre des surfaces internes du logement 36.

La navette 14 est ainsi mobile entre une configuration de coulissement dans laquelle elle coulisse le long de la ligne guide 9, et une configuration d'arrimage dans laquelle la navette 14 est disposée dans son logement 36.

L'entrée de la navette 14 dans le logement 36 active de plus les leviers 28, ce qui entraine la fermeture des bras d'accrochage 25, c'est-à-dire leur passage en position verticale, et leur maintien dans cette position par la présence de la navette 14.

La traction sur la ligne d'arrimage 20 entraine le rapprochement du dispositif de saisie 22 vers l'interface d'emboitement 35, jusqu'à l'accouplement de ces deux éléments.

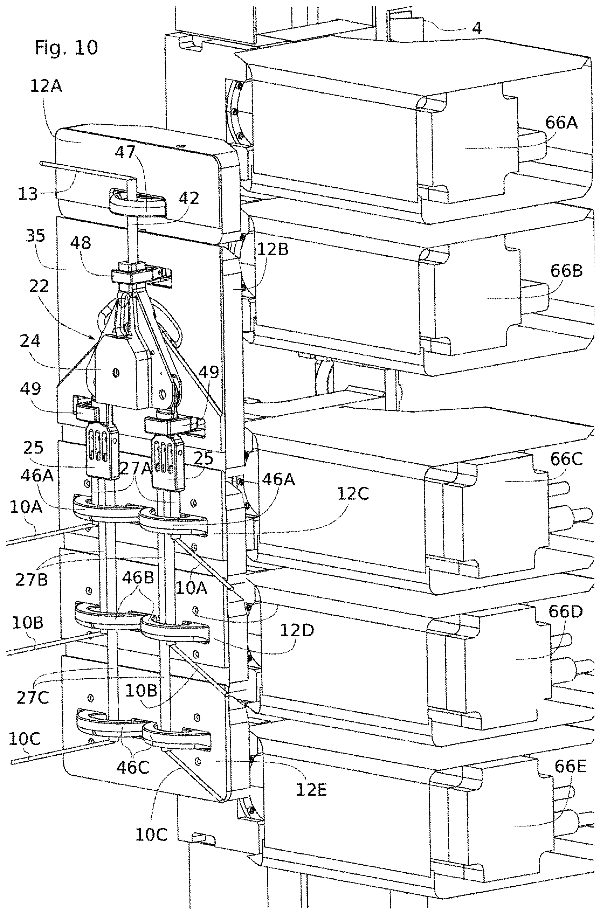

La figure 10 illustre le dispositif de saisie 22 ainsi arrimé au charriot d'arrimage 12B. Cette figure illustre également les autres charriots 12A, 12C, 12D, 12E. Chacun des charriots peut coulisser le long du mât d'arrimage 4, de manière pilotée, grâce à des actionneurs 66A, 66B, 66C, 66D, 66E.

Le charriot d'arrimage 12B comporte un crochet d'immobilisation supérieur 48 et une paire de crochets d'immobilisation inférieurs 49, qui sont mobiles entre une position rétractée, dans laquelle ils sont à l'écart du dispositif de saisie 22, et une position d'immobilisation (celle représentée à la figure 10), dans laquelle ils bloquent respectivement le corps 24 et les bras d'accrochage 25 contre l'interface d'emboitement 35.

Chacun des charriots de pliage 12C, 12D, 12E comporte une paire de crochets de saisie 46A, 46B, 46C, chacune de ces paires de crochets de saisie étant destinée à crocheter la paire de lignes de pliage 10A, 10B, 10C qui lui correspond. Ces crochets 12C, 12D, 12E sont en position rétractée sur la figure 10.

Le charriot de ferlage 12A comporte un crochet de saisie 47 destiné à actionner la ligne de ferlage 13 par la boucle 55. Le crochet de saisie 47 est également rétracté sur la figure 10.

Les crochets 46A, 46B, 46C, 47, 48 sont des crochets pivotants dans des chapes solidaires du charriot correspondant.

La figure 10 illustre les actionneurs de coulissement 66A, 66B, 66C, 66D, 66E qui équipent respectivement les charriots 12A, 12B, 12C, 12D, 12E. Chaque charriot comporte ainsi un actionneur de coulissement 66A, 66B, 66C, 66D, 66E qui est commandé par le module de commande 64 et qui permet de piloter le coulissement, ou le maintien en position fixe, de chaque charriot le long du mât d'arrimage 4. Dans le présent exemple, ces actionneurs de coulissement sont constitués chacun par un moteur électrique couplé à un pignon engrenant sur une crémaillère fixée le long du mât d'arrimage. En variante, ces actionneurs de coulissement peuvent être constitués par tout moyen permettant cette fonction, par exemple moteurs linéaires, moteurs rotatifs déportés avec transmission par chaine ou courroie, etc.

Durant le procédé de repli de l'aile de traction 5, dès lors que le dispositif de saisie 22 est accouplé à l'interface d'emboitement 35, les crochets d'immobilisation 48, 49 du charriot d'arrimage 12B sont activés vers leur position d'immobilisation pour fixer le dispositif de saisie 22 sur l'interface d'emboitement 35, comme illustré à la figure 10. À partir de cette étape, la traction de la ligne d'arrimage 20 n'est plus nécessaire pour maintenir l'arrimage.

Le crochet d'immobilisation supérieur 48 vient enserrer la partie supérieure du corps 24 tandis que les crochets d'immobilisation inférieurs 49 viennent enserrer les bras d'accrochage 25, au niveau de la zone de fixation 29, c'est-à-dire au-dessus des tiges d'accrochage 27A, 27B, 27C.

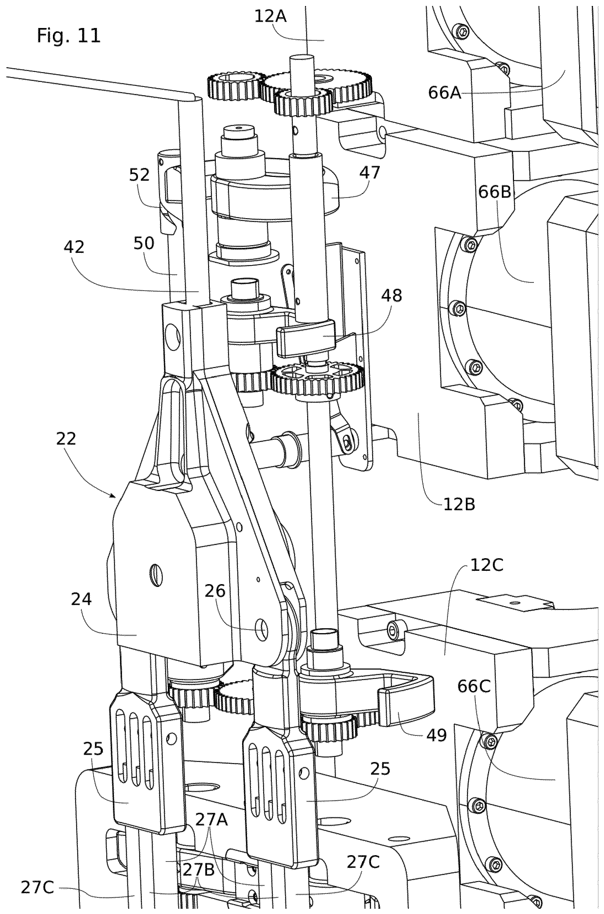

L'activation des crochets 48, 49 peut se faire par tout moyen, tels que par exemple un pivotement commandé par un moteur électrique, ou des moyens d'actionnement magnétique commandés à distance. Dans le présent exemple, l'actionnement des crochets 48, 49 se fait grâce au mouvement du charriot de ferlage 12A. La figure 11 représente en transparence les charriots pour rendre visible le mécanisme. Les crochets 48, 49 sont chacun montés rotatifs sur le charriot et sont actionnables soit par un arbre, soit par des pignons. Un arbre de commande 50 permet d'actionner en rotation l'ensemble des trois crochets 48, 49, grâce à l'agencement des pignons. Ainsi, le rapprochement du charriot de ferlage 12A en direction du charriot d'arrimage 12B entraine les crochets 48, 49 vers leur position rétractée, et un éloignement du charriot de ferlage 12A par rapport au charriot d'arrimage 12B entraine les crochets 48, 49 vers leur position d'immobilisation.

Le même type de mécanisme permet, lorsque l'éloignement du charriot de ferlage 12A par rapport au charriot d'arrimage 12B est poursuivi, d'entrainer également le crochet de ferlage 47 vers sa position de saisie, grâce à un arbre de commande coopérant avec un chemin de came hélicoïdal.

De même que précédemment, les crochets de saisie 46A, 46B, 46C des charriots de pliage 12C, 12D, 12E peuvent également être pilotés par tout moyen permettant de les refermer sur les tiges d'accrochage 27A, 27B, 27C. Dans le présent exemple, le passage des crochets de saisie 46A, 46B, 46C à leur position de saisie est de préférence commandé par l'éloignement du charriot de pliage correspondant par rapport au charriot précédent, grâce au même type de commande que précédemment, à arbre de commande, ergot, et chemin de came hélicoïdal.

Ainsi, en référence à la figure 10, le charriot de ferlage 12A est d'abord légèrement éloigné du charriot d'arrimage 12B, ce qui provoque la fermeture des crochets d'immobilisation 48, 49 et l'immobilisation du dispositif de saisie 22. Le charriot de ferlage 12A reste ensuite dans cette position, le crochet 47 étant en position rétractée.

Les charriots de pliage 12C, 12D, 12E entament ensuite chacun un mouvement de descente le long du mât d'arrimage 4, en s'éloignant les uns des autres de sorte que les paires de crochets 46A, 46B, 46C viennent se refermer sur les tiges d'accrochage 27A, 27B, 27C, comme illustré à la figure 10.

Chaque crochet 46A du premier charriot de pliage 12C vient se refermer sur les trois tiges d'accrochage 27A, 27B, 27C, c'est-à-dire juste au-dessus de l'extrémité des premières tiges d'accrochage 27A.

Chaque crochet 46B du deuxième charriot de pliage 12D vient se refermer sur deux tiges d'accrochage 27B, 27C, c'est-à-dire juste au-dessus de l'extrémité des deuxièmes tiges d'accrochage 27B.

Chaque crochet 46C du troisième charriot de pliage 12E vient se refermer uniquement sur une troisième tige d'accrochage 27C, juste au-dessus de l'extrémité des troisièmes tiges d'accrochage 27C.

Chacune des paires de crochets 46A, 46B, 46C de pliage se trouve donc, dans cette position de la figure 10, juste au-dessus de la sortie des lignes de pliage 10A, 10B, 10C qui lui correspondent.

À partir de la position de la figure 10, le mouvement de descente des charriots de pliage 12C, 12D, 12E se poursuit de sorte que :
- les troisièmes lignes de pliage 10C sont tendues à la verticale par les crochets de saisie 46C qui descendent le long du mât d'arrimage 4 en coulissant le long de ces lignes de pliage 10C ;
- les deuxièmes lignes de pliage 10B sont tendues à la verticale par les crochets de saisie 46B qui descendent le long du mât d'arrimage 4 en coulissant le long de ces lignes de pliage 10B ainsi que des lignes de pliage 10C précédemment mises à la verticale par les crochets de saisie 46C ;
- les premières lignes de pliage 10A sont tendues à la verticale par les crochets de saisie 46A qui descendent le long du mât d'arrimage 4 en coulissant le long de ces lignes de pliage 10A ainsi que des lignes de pliage 10B, 10C précédemment mises à la verticale par les crochets de saisie 46B, 46C.

Durant la descente des charriots, les crochets 46A, 46B, 46C coulissent ainsi sur leur ligne de pliage correspondante, en ramenant cette ligne de pliage verticalement le long du mât d'arrimage 4.

Ce mouvement de descente est poursuivi jusqu'à la position de pliage des figures 6 et 7.

Une fois la position de pliage atteinte, l'aile de traction 5 peut ensuite être ferlée. Le ferlage de l'aile de traction 5 est réalisé par un éloignement mutuel des charriots d'arrimage 12B et du charriot de ferlage 12A, ce qui entraine d'abord une fermeture du crochet de ferlage 47 sur la tige de ferlage 42 (voir figure 10). La poursuite de la montée du charriot de ferlage 12A entraine ensuite une traction sur la boucle 55 (la boucle 55 est visible à la figure 9, et n'a pas été représentée sur les autres figures).

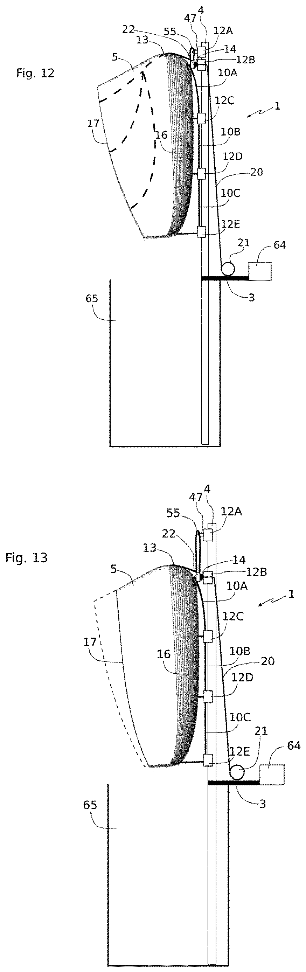

Le procédé de repli de l'aile de traction 5 va maintenant être récapitulé en référence aux vues de profil des figures 2, 4 et 6, et complété en référence aux vues de profil des figures 12 à 17.

À partir de la position de vol de la figure 2, l'aile de traction 5 est tout d'abord arrimée au charriot d'arrimage 12B grâce au dispositif de saisie 22, comme décrit précédemment. La figure 4 illustre la position d'arrimage de l'aile de traction 5 suite à cette opération, le bord d'attaque 16 de l'aile de traction 5 étant arrimé au charriot d'arrimage 12B (cet arrimage se fait, dans le présent exemple, par l'intermédiaire du dispositif de saisie 22).

Les charriots de pliage 12C, 12D, 12E saisissent ensuite les lignes de pliage 10A, 10B, 10C grâce à leurs crochets respectifs 46A, 46B, 46C.

Ensuite, le module de commande 64 pilote le coulissement des charriots de pliage 12C, 12D, 12E le long du mât d'arrimage 4, pour parvenir à la position de pliage de la figure 6.

Le module de commande 64 comporte à cet effet, dans sa programmation, un premier mode de fonctionnement dénommé « mode de pliage », dans lequel les charriots de pliage 12C, 12D, 12E sont éloignés du charriot d'arrimage 12B. Dans le présent exemple, le charriot d'arrimage 12B reste fixe sur le mât d'arrimage 4 tandis que les charriots de pliage 12C, 12D, 12E descendent chacun le long du mât d'arrimage 4, jusqu'à la position de pliage illustrée à la figure 6.

Le pilotage indépendant des charriots permet par ailleurs de réaliser des fonctions supplémentaires, telles que le pliage en manche à air de l'aile de traction 5 (par fermeture de ses bords de fuite) en exerçant une traction sur des lignes de fermeture (non représentées) qui sont reliées au bord de fuite 17, cette traction pouvant être optimisée et gérée par les mouvements des charriots.

À partir de la position de pliage de la figure 6, l'aile de traction va ensuite être simultanément ferlée et rangée dans un contenant de stockage 65, en référence aux figures 12 à 17.

Les figures 12 à 17 illustrent un détail supplémentaire du système de traction 1 : le mât d'arrimage 4 se prolonge en dessous de la plateforme de base 3, et un contenant de stockage 65 pour l'aile de traction 5 est disposé en vis-à-vis du mât d'arrimage 4 au niveau de ce prolongement.

En référence à la figure 12, le charriot de ferlage 12A saisi la ligne de ferlage 13 au niveau de la boucle de ferlage 55, grâce à son crochet 47. Notons qu'en variante, la ligne de ferlage 13 peut être saisie à tout autre moment dès la réalisation de l'arrimage, notamment à la position de la figure 4 ou de la figure 6.

Lorsque l'aile de traction 5 est pliée le long du mât d'arrimage 4, et une fois la boucle de ferlage 55 saisie par le charriot de ferlage 12A, le charriot d'arrimage 12B, ainsi que les charriots de pliage 12C, 12D, 12E vont tous les quatre être commandés simultanément en translation vers le bas. Autrement dit, ces quatre charriots 12B, 12C, 12D, 12E vont chacun coulisser vers le bas le long du mât d'arrimage 4, tout en maintenant leurs écartements mutuels respectifs.

Le module de commande 64 comporte à cet effet, dans sa programmation, un deuxième mode de fonctionnement dénommé « mode de ferlage », dans lequel le charriot d'arrimage 12B et le charriot de ferlage 12A sont éloignés l'un de l'autre. Dans le présent exemple, le charriot de ferlage 12A reste fixe sur le mât d'arrimage 4 tandis que le charriot d'arrimage 12B coulisse vers le bas. De plus, les charriots de pliage 12C, 12D, 12E descendent également le long du mât d'arrimage 4, conjointement au charriot d'arrimage 12B.

À partir de la position de la figure 12, le module de commande passe alors en mode de ferlage. Dans le mode de ferlage, le module de commande 64 est donc adapté à commander la descente du charriot d'arrimage 12B ainsi que la descente d'au moins un charriot de pliage de telle sorte que l'écartement entre ces charriots reste constant.

Cette descente conjointe des charriots 12B, 12C, 12D, 12E est illustrée à la figure 13. L'aile de traction 5 descend ainsi le long du mât arrimage 4 tout en restant pliée, c'est-à-dire en gardant la même forme qu'aux figures 6 et 7. L'aile de traction 5 garde cette forme tout en étant entièrement translatée le long du mât d'arrimage 4.

Durant la descente de l'aile de traction 5 ainsi pliée, le treuil d'arrimage 21 est de plus piloté par le module de commande 64 de sorte à enrouler au fur et à mesure la ligne d'arrimage 20. La ligne d'arrimage 20 présente ainsi toujours une légère tension garantissant qu'aucune boucle indésirable ne se formera sur le trajet de la ligne d'arrimage 20. Du mou dans la ligne d'arrivée d'arrimage 20 risquerait en effet d'entrainer des blocages intempestifs de cette ligne d'arrimage 20, par exemple autour de l'un des éléments mobiles du système.

Durant la descente de l'aile de traction 5, le module de commande 64 maintient le charriot de ferlage 12A fixe sur le mât arrimage 4. L'éloignement du charriot de ferlage 12A et du charriot d'arrimage 12B provoque une traction sur la boucle de ferlage 55. Le charriot de ferlage 12A ayant saisi la boucle de ferlage 55 de manière coulissante, par le crochet 47, ce mouvement entraine une traction directe sur la ligne de ferlage 13, et donc le ferlage de l'aile de traction 5. Ainsi, la figure 13 illustre le ferlage de l'aile de traction 5 par le rapprochement du bord de fuite 17 en direction du bord d'attaque 16 (schématisé par les pointillés sur la figure 13).

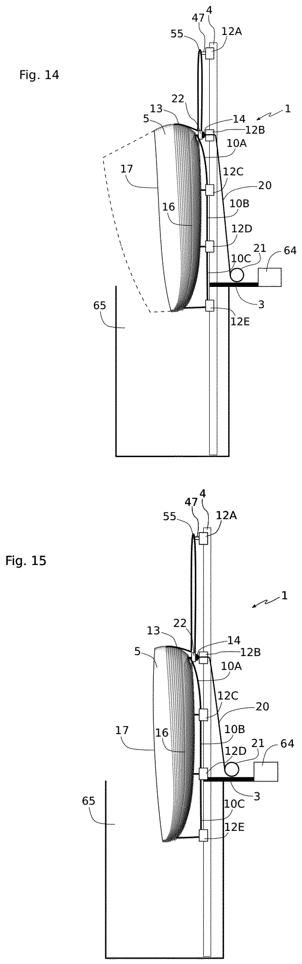

La figure 14 illustre une étape suivante de la descente de l'aile de traction 5 alors que le module de commande 64 est en mode de ferlage. L'aile de traction 5 poursuit sa translation en gardant sa position de pliage (la position relative des charriots d'arrimage 12B et de pliage 12C, 12D, 12E n'ayant pas été modifiée) tandis que le charriot de ferlage 12A est maintenu fixe, et le ferlage de l'aile de traction 5 se poursuit.

Le ferlage de la voile est ainsi réalisé simultanément à sa descente dans le contenant de stockage 65 jusqu'à la position de ferlage maximale illustrée à la figure 15. Dans cette position, bien que l'aile de traction n'ait pas encore été complètement rangée, elle est désormais pliée et complètement ferlée. Elle est de plus déjà partiellement introduite dans le contenant de stockage 65 de sorte qu'elle subit moins d'efforts liés au vent.

Le module de commande 64 passe alors dans un autre mode de fonctionnement appelé « mode de stockage », grâce auquel l'aile de traction va être rangée dans le contenant 65.

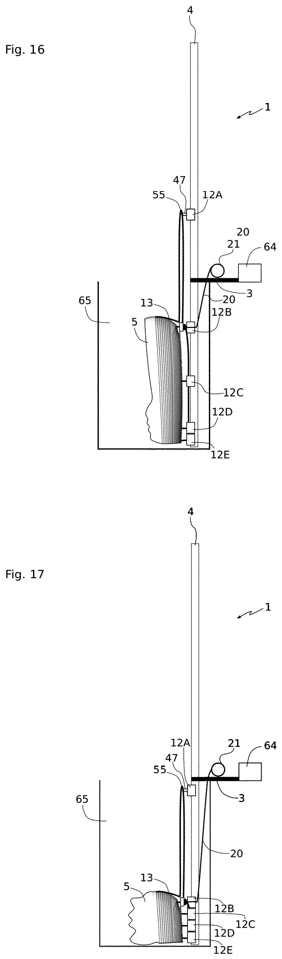

En référence à la figure 16, le procédé de repli se poursuit ensuite par ce mode de stockage dans lequel :
- l'ensemble des charriots sont translatés vers le bas jusqu'à ce que le troisième charriot de pliage 12E atteignent sa position de butée basse (celle visible sur la figure 16). L'aile de traction 5 est ainsi coulissée le long du mât d'arrimage, en direction du contenant 65, en restant ferlée ;
- puis l'écartement relatif du charriot de ferlage 12A et du charriot d'arrimage 12B continue à être maintenu fixe, tandis que le charriot d'arrimage 12B et au moins l'un des charriots de pliage 12C, 12D, 12E sont rapprochés l'un de l'autre.

Dans le présent exemple, le charriot de ferlage 12A et le charriot d'arrimage 12B descendent conjointement le long du mât d'arrimage 4, le module de commande 64 maintenant leur écartement mutuel, tandis que les charriots de pliage 12C, 12D, 12E sont rapprochés les uns des autres. Le charriot d'arrimage 12B se rapproche donc d'au moins un charriot de pliage 12A, 12B, 12C. En pratique dans cet exemple, le charriot d'arrimage 12B et les deux premiers charriots de pliage 12C, 12D se rapprochent ensemble du troisième charriot de pliage 12E (qui est maintenu fixe dans sa position de butée basse), puis le deuxième charriot de pliage rejoint 12D rejoint le troisième charriot de pliage 12E (c'est la position illustrée à la figure 16).

Ensuite, le mouvement continue le charriot 12C qui se rapproche du charriot 12D (conjointement aux charriots 12A et 12B qui suivent en maintenant leur écartement constant), qui reste fixe contre (ou à proximité) du charriot 12E. Le premier charriot de pliage 12C rejoint ensuite le deuxième charriot de pliage 12D, jusqu'à une position où les quatre charriots 12B, 12C, 12D, 12E viennent en butée les uns à proximité des autres (la configuration illustrée à la figure 17).

En variante, tous les charriots de pliage 12C, 12D, 12E peuvent être simultanément rapprochés du charriot d'arrimage 12B lors du coulissement vers le bas de ce dernier.

En variante également pour le mode de stockage, le charriot de ferlage 12A et le charriot d'arrimage 12B coulissent vers le bas en maintenant constant leur écart mutuel, et au moins l'un des charriots de pliage 12C, 12D, 12E coulisse vers le bas à une vitesse inférieure à la vitesse de coulissement du charriot d'arrimage 12B.

La figure 17 illustre cette position finale dans laquelle l'aile de traction 5 est maintenant rangée dans le contenant de stockage 65. Le charriot d'arrimage 12B et les charriots de pliage 12C, 12D, 12E sont proches les uns des autres (voire en butée les uns contre les autres), et l'écartement entre le charriot de ferlage 12A et le charriot d'arrimage 12B a été maintenu identique (le charriot de ferlage 12A a coulissé le long du mât d'arrimage conjointement au charriot d'arrimage 12B).

Durant toutes les opérations précédentes, la ligne d'arrimage 20 est maintenue en légère tension comme exposé précédemment grâce au pilotage du treuil d'arrimage 21. De plus, le maintien de l'écartement mutuel entre le charriot de ferlage 12A et le charriot d'arrimage 12B permet de maintenir la voile ferlée durant son stockage.

La voile peut être ainsi stockée dans le contenant de stockage 65 dans cette position de la figure 17 si l'on souhaite maintenir la voile ferlée même durant son stockage. En variante, il est également possible, dans une opération supplémentaire, de rapprocher le charriot de ferlage 12A du charriot d'arrimage 12B de sorte que les tensions de l'aile de traction 5 soient relâchées à l'intérieur du contenant de stockage 65. Dans ce cas, l'aile sera à nouveau ferlée par une remontée du charriot de ferlage 12A, avant un nouveau déploiement de l'aile de traction 5.

Les opérations de pliage, de ferlage et de stockage de l'aile de traction 5 sont ainsi imbriquées par le jeu des charriots 12A, 12B, 12C, 12D, 12E. D'autres fonctions peuvent de plus être réalisées par ce jeu des charriots, comme la fermeture du bord de fuite de l'aile de traction, par la traction sur des lignes de fermeture.

Le procédé de repli de l'aile de traction 5 est ainsi terminé et l'aile reste stockée dans son contenant de stockage 65 jusqu'à son prochain déploiement.

Le déploiement de l'aile de traction 5 est obtenu par les mêmes opérations que celles décrites précédemment, réalisées dans l'ordre inverse. Le module de commande 64 comporte ainsi, de manière inversée par rapport au mode de ferlage, au mode de pliage, et au mode de stockage :
- un mode de déstockage dans lequel le charriot de ferlage 12A et le charriot d'arrimage 12B sont translatés vers le haut le long du mât d'arrimage 4 en maintenant constant leur écartement mutuel qui correspond au ferlage maximum de l'aile de traction 5. Dans ce mode, le charriot d'arrimage 12B est d'abord éloigné au maximum du premier charriot de pliage 12C, ce dernier coulisse ensuite lui-même vers le haut, conjointement aux deux autres charriots 12A, 12B, et s'éloigne du deuxième charriot de pliage 12D au maximum. Puis ce charriot 12D coulisse ensuite lui-même vers le haut, conjointement aux trois autres charriots 12A, 12B, 12C, et s'éloigne du troisième charriot de pliage 12E au maximum, jusqu'à la position de la figure 15. En variante du mode de déstockage, le charriot de ferlage 12A et le charriot d'arrimage 12B coulissent vers le haut en maintenant constant leur écart mutuel, et au moins un charriot de pliage 12C,12D,12E coulisse vers le haut à une vitesse inférieure à la vitesse de coulissement du charriot d'arrimage 12B ;
- un mode de déferlage dans lequel, à partir de la position de la figure 15, le charriot de ferlage 12A et le charriot d'arrimage 12B sont rapprochés l'un de l'autre. Dans le présent exemple, le charriot de ferlage 12A est maintenu fixe sur le mât d'arrimage tandis que l'ensemble des charriots 12B, 12C, 12D, 12E continuent leur coulissement vers le haut, conjointement, jusqu'à la position déferlée de la figure 12 ;
- un mode de dépliage dans lequel le charriot d'arrimage 12B et au moins un charriot de pliage sont rapprochés l'un de l'autre. Dans le présent exemple, tous les charriots de pliage 12C, 12D, 12E coulissent le long du mât d'arrimage 4 vers le haut, tandis que le charriot de ferlage 12A et le charriot d'arrimage 12B sont maintenus fixes l'un contre l'autre, et ce jusqu'à la position de dépliage de la figure 4 dans laquelle l'aile de traction 5 est prête à voler. Le bord d'attaque 16 peut ensuite être relâché (en relâchant les crochets 48, 19 et la ligne d'arrimage 20) et l'aille de traction rejoint sa position de vol.

Des variantes de réalisation du système de traction et des procédés associés peuvent être mis en œuvre. Notamment, tout autre moyen de saisie des lignes de ferlage 13 et des lignes de pliage 10A, 10B, 10C peut être envisagé.

De même, les actionneurs de coulissement 66A, 66B ,66C, 66D, 66E peuvent être des actionneurs individuels pour chaque charriot correspondant, ou être mutualisés par un seul actionneur commun associé à des moyens de transmission adéquats pour chacun des charriots.

Les modes de fonctionnement du module de commande peuvent être optionnellement mis en œuvre séquentiellement dans un ordre différent, ou simultanément.

Notamment, à partir de la position de pliage de la figure 6, l'aile de traction 5 est simultanément ferlée et rangée dans le contenant de stockage 65. Cependant, il est également possible de ferler l'aile de traction d'abord, en remontant le charriot de ferlage 12A et en maintenant les autres charriots fixes. Ces différentes solutions de cinématique peuvent de plus être combinées.

## Revendications

1. Système de traction à aile captive, comportant :
- une aile de traction (5) adaptée à générer une force de traction sous l'effet du vent, cette aile de traction (5) présentant un bord d'attaque (16) et un bord de fuite (17) ;
- une plateforme de base (3) à laquelle l'aile de traction est reliée par l'intermédiaire d'une ligne de traction (8), l'aile de traction (5) étant adaptée à être déployée et repliée par rapport à cette plateforme de base (3) ;
- un mât d'arrimage (4) pour l'aile de traction (5), disposé sur la plateforme de base (3) ;
- plusieurs lignes de pliage (10A,10B,10C) ayant chacune une extrémité fixée au bord d'attaque (16) de l'aile de traction (5), en étant espacées les unes des autres le long de ce bord d'attaque (16) ;
- une ligne de ferlage (13) reliée au bord de fuite (17) de l'aile de traction (5) ;
ce système de traction à aile captive étant **caractérisé en ce qu'**il comporte :
- un charriot d'arrimage (12B) adapté à coulisser le long du mât d'arrimage (4) et commandé par un actionneur de coulissement (66B), ce charriot d'arrimage (12B) comportant une interface d'emboitement (35) adaptée à maintenir arrimé le bort d'attaque (16) de l'aile de traction (5) ;
- un charriot de pliage (12C,12D,12E) adapté à coulisser le long du mât d'arrimage (4) et commandé par un actionneur de coulissement (66C,66D,66E), ce charriot de pliage (12C,12D,12E) comportant des moyens de saisie (46A,46B,46C) adaptés à saisir au moins une ligne de pliage (10A,10B,10C) ;
- un charriot de ferlage (12A) adapté à coulisser le long du mât d'arrimage (4) et commandé par un actionneur de coulissement (66A), ce charriot de ferlage (12A) comportant des moyens de saisie (47) adaptés à saisir la ligne de ferlage (13) ;
- un module de commande (64) desdits actionneurs de coulissement (66A,66B,66C,66D,66E), ce module de commande (64) comportant au moins les deux modes de fonctionnement suivants : un mode de pliage dans lequel le charriot d'arrimage (12B) et le charriot de pliage (12C,12D,12E) sont éloignés l'un de l'autre ;
un mode de ferlage dans lequel le charriot de ferlage (12A) et le charriot d'arrimage (12B) sont éloignées l'un de l'autre.

2. Système de traction à aile captive selon la revendication 1, **caractérisé en ce que**, dans le mode de pliage, le charriot d'arrimage (12B) est maintenu fixe sur le mât d'arrimage (4) et le charriot de pliage (12C,12D,12E) coulisse vers le bas.

3. Système de traction à aile captive selon l'une des revendications précédentes, **caractérisé en ce que**, dans le mode de ferlage, le charriot de ferlage (12A) est maintenu fixe sur le mât d'arrimage (4) et le charriot d'arrimage (12B) coulisse vers le bas.

4. Système de traction à aile captive selon l'une des revendications 1 ou 2, **caractérisé en ce que**, dans le mode de ferlage, le charriot de ferlage (12A) coulisse vers le haut, et le charriot d'arrimage (12B) est maintenu fixe sur le mât d'arrimage (4).

5. Système de traction à aile captive selon la revendication 4, **caractérisé en ce que**, dans le mode de ferlage, le charriot de pliage (12C,12D,12E) coulisse également vers le bas, l'écart entre le charriot d'arrimage (12B) et le charriot de pliage (12C,12D,12E) étant maintenu constant.

6. Système de traction à aile captive selon l'une des revendications précédentes, **caractérisé en ce que** le module de commande (64) comporte de plus le mode de fonctionnement suivant : un mode de déferlage dans lequel le charriot de ferlage (12A) et le charriot d'arrimage (12B) sont rapprochés l'un de l'autre.

7. Système de traction à aile captive selon la revendication 6, **caractérisé en ce que**, dans le mode de déferlage, le charriot de ferlage (12A) est maintenu fixe sur le mât d'arrimage (4) et le charriot d'arrimage (12B) coulisse vers le haut.

8. Système de traction à aile captive selon l'une des revendications précédentes, **caractérisé en ce que** le module de commande (64) comporte de plus le mode de fonctionnement suivant : un mode de dépliage dans lequel le charriot d'arrimage (12B) et le charriot de pliage (12C, 12D, 12E) sont rapprochés l'un de l'autre.

9. Système de traction à aile captive selon la revendication 8, **caractérisé en ce que**, dans le mode de dépliage, le charriot d'arrimage (12B) est maintenu fixe sur le mât d'arrimage (4) et le charriot de pliage (12C,12D,12E) coulisse vers le haut.

10. Système de traction à aile captive selon l'une des revendications précédentes, **caractérisé en ce que** le module de commande (64) comporte de plus le mode de fonctionnement suivant : un mode de stockage dans lequel l'écart entre le charriot de ferlage (12A) et le charriot d'arrimage (12B) est maintenu constant, tandis que le charriot d'arrimage (12B) et le charriot de pliage (12C, 12D, 12E) sont rapprochés l'un de l'autre.

11. Système de traction à aile captive selon la revendication 10, **caractérisé en ce que**, dans le mode de stockage, le charriot de ferlage (12A) et le charriot d'arrimage (12B) coulissent vers le bas en maintenant constant leur écart mutuel, et le charriot de pliage (12C,12D,12E) coulisse vers le bas à une vitesse inférieure à la vitesse de coulissement du charriot d'arrimage (12B).

12. Système de traction à aile captive selon la revendication 10, **caractérisé en ce que**, dans le mode de stockage, le charriot de pliage (12C,12D,12E) est maintenu fixe.

13. Système de traction à aile captive selon l'une des revendications 10 à 12, **caractérisé en ce que** le module de commande (64) comporte de plus le mode de fonctionnement suivant : un mode de déstockage dans lequel l'écart entre le charriot de ferlage (12A) et le charriot d'arrimage (12B) est maintenu constant, tandis que le charriot d'arrimage (12B) et le charriot de pliage (12C,12D,12E) sont éloignés l'un de l'autre.

14. Système de traction à aile captive selon la revendication 13, **caractérisé en ce que**, dans le mode de déstockage, le charriot de ferlage (12A) et le charriot d'arrimage (12B) coulissent vers le haut en maintenant constant leur écart mutuel, et le charriot de pliage (12C,12D,12E) coulisse vers le haut à une vitesse inférieure à la vitesse de coulissement du charriot d'arrimage (12B).

15. Système de traction à aile captive selon l'une des revendications précédentes, **caractérisé en ce qu'**il comporte un dispositif de saisie de lignes (22) qui est relié au bord d'attaque (16) de l'aile de traction (5) et qui est adapté à s'accoupler avec l'interface d'emboitement (35) du charriot d'arrimage (12B), le charriot de ferlage (12A) étant adapté à saisir la ligne de ferlage (13) sur le dispositif de saisie de lignes (22), et le charriot de pliage (12C,12D,12E) étant adapté à saisir au moins une ligne de pliage (10A,10B,10C) sur le dispositif de saisie de lignes (22).

16. Système de traction à aile captive selon l'une des revendications précédentes, **caractérisé en ce qu'**il comporte une ligne d'arrimage (20) de l'aile de traction (5) sur l'interface d'emboitement (35) du charriot d'arrimage (12B), la longueur de cette ligne d'arrimage (20) étant commandée par le module de commande (64) de sorte que la ligne d'arrimage (20) soit maintenue en tension durant le mode de ferlage et le mode de pliage.

17. Système de traction à aile captive selon la revendication 16, lorsqu'elle dépend des revendications 10 à 14, caractérisé en ce la longueur de la ligne d'arrimage (20) est commandée par le module de commande (64) de sorte que la ligne d'arrimage (20) soit maintenue en tension également durant le mode de stockage.

18. Procédé de repli de l'aile de traction d'un système de traction selon l'une des revendications 1 à 17, **caractérisé en ce qu'**il comporte les étapes suivantes :
- arrimage du bord d'attaque (16) de l'aile de traction (5) sur le charriot d'arrimage (12B) ;
- saisie d'au moins une ligne de pliage (10A,10B,10C) par le charriot de pliage (12C,12D,12E) ;
- coulissement du charriot de pliage (12C,12D,12E) vers le bas tandis que le charriot d'arrimage (12B) reste fixe sur le mât d'arrimage (4) ;
- saisie de la ligne de ferlage (13) par le charriot de ferlage (12A) ;
- coulissement du charriot d'arrimage (12B) vers le bas tandis que le charriot de ferlage (12A) reste fixe sur le mât d'arrimage (4).

19. Procédé de déploiement de l'aile de traction d'un système de traction selon l'une des revendications 1 à 17, **caractérisé en ce qu'**il comporte les étapes suivantes :
- coulissement du charriot d'arrimage (12B) vers le haut tandis que le charriot de ferlage (12A) est maintenu fixe sur le mât d'arrimage (4) ;
- coulissement du charriot de pliage (12C, 12D, 12E) vers le haut tandis que le charriot d'arrimage (12B) est maintenu fixe sur le mât d'arrimage (4).

## Patentansprüche

1. Schleppsystem mit angebundenem Schirm, das Folgendes aufweist:
- einen Schleppschirm (5), der dazu geeignet ist, unter dem Einfluss von Wind eine Zugkraft zu erzeugen, wobei der Schleppschirm (5) eine Anströmkante (16) und eine Abströmkante (17) aufweist;
- eine Basisplattform (3), mit der der Schleppschirm über eine Schleppleine (8) verbunden ist, wobei der Schleppschirm (5) so beschaffen ist, dass er in Bezug auf diese Basisplattform (3) entfaltet und zusammengefaltet werden kann;
- einen Befestigungsmast (4) für den Schleppschirm (5), der auf der Basisplattform (3) angeordnet ist;
- mehrere Faltleinen (10A, 10B, 10C), von denen jede ein Ende hat, das an der Anströmkante (16) des Schleppschirms (5) befestigt ist, und die entlang dieser Anströmkante (16) voneinander beabstandet sind;
- eine Zurrleine (13), die mit der Abströmkante (17) des Schleppschirms (5) verbunden ist;
wobei dieses Schleppsystem mit angebundenem Schirm **dadurch gekennzeichnet ist, dass** es Folgendes aufweist:
- einen Befestigungsschlitten (12B), der dazu geeignet ist, entlang des Befestigungsmastes (4) zu gleiten, und der durch einen Schiebeantrieb (66B) gesteuert wird, wobei dieser Befestigungsschlitten (12B) eine Einsteckschnittstelle (35) aufweist, die dazu geeignet ist, die Anströmkante (16) des Schleppschirms (5) festzuhalten;
- einen Faltschlitten (12C, 12D, 12E), der dazu geeignet ist, entlang des Befestigungsmastes (4) zu gleiten, und der durch einen Schiebeantrieb (66C, 66D, 66E) gesteuert wird, wobei dieser Faltschlitten (12C, 12D, 12E) Greifmittel (46A, 46B, 46C) aufweist, die dazu geeignet sind, mindestens eine Faltleine (10A, 10B, 10C) zu greifen;
- einen Zurrschlitten (12A), der dazu geeignet ist, entlang des Befestigungsmastes (4) zu gleiten, und der durch einen Schiebeantrieb (66A) gesteuert wird, wobei dieser Zurrschlitten (12A) Greifmittel (47) aufweist, die dazu geeignet sind, die Zurrleine (13) zu greifen;
- ein Steuermodul (64) für die Schiebeantriebe (66A, 66B, 66C, 66D, 66E), wobei dieses Steuermodul (64) mindestens die folgenden zwei Betriebsarten aufweist:
einen Faltmodus, in dem der Befestigungsschlitten (12B) und der Faltschlitten (12C, 12D, 12E) voneinander entfernt sind;
einen Zurrmodus, in dem der Zurrschlitten (12A) und der Befestigungsschlitten (12B) voneinander entfernt sind.

2. Schleppsystem mit angebundenem Schirm nach Anspruch 1, **dadurch gekennzeichnet, dass** im Faltmodus der Befestigungsschlitten (12B) fest an dem Befestigungsmast (4) gehalten wird und der Faltschlitten (12C, 12D, 12E) nach unten gleitet.

3. Schleppsystem mit angebundenem Schirm nach einem der vorhergehenden Ansprüche, **dadurch gekennzeichnet, dass** im Zurrmodus der Zurrschlitten (12A) fest an dem Befestigungsmast (4) gehalten wird und der Befestigungsschlitten (12B) nach unten gleitet.

4. Schleppsystem mit angebundenem Schirm nach einem der Ansprüche 1 oder 2, **dadurch gekennzeichnet, dass** im Zurrmodus der Zurrschlitten (12A) nach oben gleitet und der Befestigungsschlitten (12B) fest an dem Befestigungsmast (4) gehalten wird.

5. Schleppsystem mit angebundenem Schirm nach Anspruch 4, **dadurch gekennzeichnet, dass** im Zurrmodus der Faltschlitten (12C, 12D, 12E) ebenfalls nach unten gleitet, wobei der Abstand zwischen dem Befestigungsschlitten (12B) und dem Faltschlitten (12C, 12D, 12E) konstant gehalten wird.

6. Schleppsystem mit angebundenem Schirm nach einem der vorhergehenden Ansprüche, **dadurch gekennzeichnet, dass** das Steuermodul (64) zusätzlich den folgenden Betriebsmodus aufweist: einen Lösemodus, in dem der Zurrschlitten (12A) und der Befestigungsschlitten (12B) aufeinander zu bewegt werden.

7. Schleppsystem mit angebundenem Schirm nach Anspruch 6, **dadurch gekennzeichnet, dass** im Lösemodus der Zurrschlitten (12A) fest an dem Befestigungsmast (4) gehalten wird und der Befestigungsschlitten (12B) nach oben gleitet.

8. Schleppsystem mit angebundenem Schirm nach einem der vorhergehenden Ansprüche, **dadurch gekennzeichnet, dass** das Steuermodul (64) zusätzlich den folgenden Betriebsmodus aufweist: einen Entfaltmodus, in dem der Befestigungsschlitten (12B) und der Faltschlitten(12C, 12D, 12E) aufeinander zu bewegt werden.

9. Schleppsystem mit angebundenem Schirm nach Anspruch 8, **dadurch gekennzeichnet, dass** im Entfaltmodus der Befestigungsschlitten (12B) fest an dem Befestigungsmast (4) gehalten wird und der Faltschlitten (12C, 12D, 12E) nach oben gleitet.

10. Schleppsystem mit angebundenem Schirm nach einem der vorhergehenden Ansprüche, **dadurch gekennzeichnet, dass** das Steuermodul (64) zusätzlich den folgenden Betriebsmodus aufweist: einen Lagermodus, in dem der Abstand zwischen dem Zurrschlitten (12A) und dem Befestigungsschlitten (12B) konstant gehalten wird, während der Befestigungsschlitten (12B) und der Faltschlitten (12C, 12D, 12E) aufeinander zu bewegt werden.

11. Schleppsystem mit angebundenem Schirm nach Anspruch 10, **dadurch gekennzeichnet, dass** im Lagermodus der Zurrschlitten (12A) und der Befestigungsschlitten (12B) nach unten gleiten, wobei ihr gegenseitiger Abstand konstant gehalten wird, und der Faltschlitten (12C, 12D, 12E) mit einer Geschwindigkeit nach unten gleitet, die geringer ist als die Gleitgeschwindigkeit des Befestigungsschlittens (12B).

12. Schleppsystem mit angebundenem Schirm nach Anspruch 10, **dadurch gekennzeichnet, dass** im Lagermodus der Befestigungsschlitten (12C, 12D, 12E) festgehalten wird.

13. Schleppsystem mit angebundenem Schirm nach einem der Ansprüche 10 bis 12, **dadurch gekennzeichnet, dass** das Steuermodul (64) zusätzlich den folgenden Betriebsmodus aufweist: einen Auslagermodus, in dem der Abstand zwischen dem Zurrschlitten (12A) und dem Befestigungsschlitten (12B) konstant gehalten wird, während der Befestigungsschlitten (12B) und der Faltschlitten (12C, 12D, 12E) voneinander weg bewegt werden.

14. Schleppsystem mit angebundenem Schirm nach Anspruch 13, **dadurch gekennzeichnet, dass** im Auslagermodus der Zurrschlitten (12A) und der Befestigungsschlitten (12B) nach oben gleiten, wobei ihr gegenseitiger Abstand konstant gehalten wird, und der Faltschlitten (12C, 12D, 12E) mit einer Geschwindigkeit nach oben gleitet, die geringer ist als die Gleitgeschwindigkeit des Befestigungsschlittens (12B).

15. Schleppsystem mit angebundenem Schirm nach einem der vorhergehenden Ansprüche, **dadurch gekennzeichnet, dass** es eine Leinengreifvorrichtung (22) aufweist, die mit der Anströmkante (16) des Schleppschirms (5) verbunden ist und die dazu ausgelegt ist, mit der Einsteckschnittstelle (35) des Befestigungsschlittens (12B) zusammenzupassen, wobei der Zurrschlitten (12A) dazu ausgelegt ist, die Zurrleine (13) auf der Leinengreifvorrichtung (22) zu ergreifen, und der Faltschlitten (12C, 12D, 12E) dazu ausgelegt ist, mindestens eine Faltleine (10A, 10B, 10C) auf der Leinengreifvorrichtung (22) zu ergreifen.

16. Schleppsystem mit angebundenem Schirm nach einem der vorhergehenden Ansprüche, **dadurch gekennzeichnet, dass** es eine Leine (20) zum Befestigen des Schleppschirms (5) an der Einsteckschnittstelle (35) des Befestigungsschlittens (12B) aufweist, wobei die Länge dieser Befestigungsleine (20) durch das Steuermodul (64) so gesteuert wird, dass die Befestigungsleine (20) während des Zurrmodus und des Faltmodus unter Spannung gehalten wird.

17. Schleppsystem mit angebundenem Schirm nach Anspruch 16, das, wenn es von den Ansprüchen 10 bis 14 abhängt, **dadurch gekennzeichnet ist, dass** die Länge der Befestigungsleine (20) durch das Steuermodul (64) so gesteuert wird, dass die Befestigungsleine (20) auch während des Lagermodus unter Spannung gehalten wird.

18. Verfahren zum Zusammenfalten des Schleppschirms eines Schleppsystems nach einem der Ansprüche 1 bis 17, **dadurch gekennzeichnet, dass** es die folgenden Schritte aufweist:
- Befestigen der Anströmkante (16) des Schleppschirms (5) am Befestigungsschlitten (12B);
- Ergreifen mindestens einer Faltleine (10A,10B,10C) mit dem Faltschlitten (12C,12D,12E);
- Schieben des Faltschlittens (12C,12D,12E) nach unten, während der Befestigungsschlitten (12B) fest an dem Befestigungsmast (4) gehalten wird;
- Ergreifen der Zurrleine (13) durch den Zurrschlitten (12A);
- Schieben des Befestigungsschlittens (12B) nach unten, während der Zurrschlitten (12A) fest an dem Befestigungsmast (4) gehalten wird.

19. Verfahren zum Entfalten des Schleppschirms eines Schleppsystems nach einem der Ansprüche 1 bis 17, **dadurch gekennzeichnet, dass** es die folgenden Schritte aufweist:
- Schieben des Befestigungsschlittens (12B) nach oben, während der Zurrschlitten (12A) fest an dem Befestigungsmast (4) gehalten wird;
- Schieben des Faltschlittens (12C,12D,12E) nach oben, während der Befestigungsschlitten (12B) fest an dem Befestigungsmast (4) gehalten wird.

## Claims

1. A tethered-wing traction system having:
- a traction wing (5) designed to generate a traction force under the effect of the wind, this traction wing (5) having a leading edge (16) and a trailing edge (17);
- a base platform (3) to which the traction wing is connected via a traction line (8), the traction wing (5) being designed to be deployed and folded in relation to this base platform (3);
- a mooring mast (4) for the traction wing (5), disposed on the base platform (3);
- multiple folding lines (10A, 10B, 10C) each having an end fixed to the leading edge (16) of the traction wing (5), the ends being spaced apart from one another along this leading edge (16);
- a furling line (13) connected to the trailing edge (17) of the traction wing (5);
this tethered-wing traction system being **characterized in that** it has:
- a mooring carriage (12B) designed to slide along the mooring mast (4) and controlled by a slide actuator (66B), this mooring carriage (12B) having an engagement interface (35) designed to keep the leading edge (16) of the traction wing (5) moored;
- a folding carriage (12C, 12D, 12E) designed to slide along the mooring mast (4) and controlled by a slide actuator (66C, 66D, 66E), this folding carriage (12C, 12D, 12E) having capturing means (46A, 46B, 46C) designed to capture at least one folding line (10A, 10B, 10C);
- a furling carriage (12A) designed to slide along the mooring mast (4) and controlled by a slide actuator (66A), this furling carriage (12A) having capturing means (47) designed to capture the furling line (13);
- a control module (64) for controlling said slide actuators (66A, 66B, 66C, 66D, 66E), this control module (64) having at least the following two modes of operation: a folding mode in which the mooring carriage (12B) and the folding carriage (12C, 12D, 12E) are moved away from one another; a furling mode in which the furling carriage (12A) and the mooring carriage (12B) are moved away from one another.

2. The tethered-wing traction system as claimed in claim 1, **characterized in that**, in the folding mode, the mooring carriage (12B) is kept fixed in place on the mooring mast (4) and the folding carriage (12C, 12D, 12E) slides downward.

3. The tethered-wing traction system as claimed in either of the preceding claims, **characterized in that**, in the furling mode, the furling carriage (12A) is kept fixed in place on the mooring mast (4) and the mooring carriage (12B) slides downward.

4. The tethered-wing traction system as claimed in either of claims 1 and 2, **characterized in that**, in the furling mode, the furling carriage (12A) slides upward, and the mooring carriage (12B) is kept fixed in place on the mooring mast (4).

5. The tethered-wing traction system as claimed in claim 4, **characterized in that**, in the furling mode, the folding carriage (12C, 12D, 12E) also slides downward, the spacing between the mooring carriage (12B) and the folding carriage (12C, 12D, 12E) being kept constant.

6. The tethered-wing traction system as claimed in one of the preceding claims, **characterized in that** the control module (64) also has the following mode of operation: an unfurling mode in which the furling carriage (12A) and the mooring carriage (12B) are moved close to one another.

7. The tethered-wing traction system as claimed in claim 6, **characterized in that**, in the unfurling mode, the furling carriage (12A) is kept fixed in place on the mooring mast (4) and the mooring carriage (12B) slides upward.

8. The tethered-wing traction system as claimed in one of the preceding claims, **characterized in that** the control module (64) also has the following mode of operation: an unfolding mode in which the mooring carriage (12B) and the folding carriage (12C, 12D, 12E) are moved close to one another.

9. The tethered-wing traction system as claimed in claim 8, **characterized in that**, in the unfolding mode, the mooring carriage (12B) is kept fixed in place on the mooring mast (4) and the folding carriage (12C, 12D, 12E) slides upward.

10. The tethered-wing traction system as claimed in one of the preceding claims, **characterized in that** the control module (64) also has the following mode of operation: a storage mode in which the spacing between the furling carriage (12A) and the mooring carriage (12B) is kept constant, while the mooring carriage (12B) and the folding carriage (12C, 12D, 12E) are moved close to one another.

11. The tethered-wing traction system as claimed in claim 10, **characterized in that**, in the storage mode, the furling carriage (12A) and the mooring carriage (12B) slide downward while keeping their mutual spacing constant, and the folding carriage (12C, 12D, 12E) slides downward at a slower speed than the sliding speed of the mooring carriage (12B).

12. The tethered-wing traction system as claimed in claim 10, **characterized in that**, in the storage mode, the folding carriage (12C, 12D, 12E) is kept fixed in place.

13. The tethered-wing traction system as claimed in one of claims 10 to 12, **characterized in that** the control module (64) also has the following mode of operation: a release mode in which the spacing between the furling carriage (12A) and the mooring carriage (12B) is kept constant, whereas the mooring carriage (12B) and the folding carriage (12C, 12D, 12E) are moved away from one another.

14. The tethered-wing traction system as claimed in claim 13, **characterized in that**, in the release mode, the furling carriage (12A) and the mooring carriage (12B) slide upward while keeping their mutual spacing constant, and the folding carriage (12C, 12D, 12E) slides upward at a slower speed than the sliding speed of the mooring carriage (12B).

15. The tethered-wing traction system as claimed in one of the preceding claims, **characterized in that** it has a line capturing device (22) which is connected to the leading edge (16) of the traction wing (5) and is designed to be coupled to the engagement interface (35) of the mooring carriage (12B), the furling carriage (12A) being designed to capture the furling line (13) in the line capturing device (22), and the folding carriage (12C, 12D, 12E) being designed to capture at least one folding line (10A, 10B, 10C) in the line capturing device (22).

16. The tethered-wing traction system as claimed in one of the preceding claims, **characterized in that** it has a mooring line (20) for mooring the traction wing (5) to the engagement interface (35) of the mooring carriage (12B), the length of this mooring line (20) being controlled by the control module (64) such that the mooring line (20) is kept under tension during the furling mode and the folding mode.

17. The tethered-wing traction system as claimed in claim 16, when it is dependent on claims 10 to 14, **characterized in that** the length of the mooring line (20) is controlled by the control module (64) such that the mooring line (20) is also kept under tension during the storage mode.

18. A process for folding the traction wing of a traction system as claimed in one of claims 1 to 17, **characterized in that** it has the following steps:
- mooring the leading edge (16) of the traction wing (5) to the mooring carriage (12B);
- capturing at least one folding line (10A, 10B, 10C) by way of the folding carriage (12C, 12D, 12E);
- sliding the folding carriage (12C, 12D, 12E) downward while the mooring carriage (12B) remains fixed in place on the mooring mast (4);
- capturing the furling line (13) by way of the furling carriage (12A);
- sliding the mooring carriage (12B) downward while the furling carriage (12A) remains fixed in place on the mooring mast (4).

19. A process for deploying the traction wing of a traction system as claimed in one of claims 1 to 17, **characterized in that** it has the following steps:
- sliding the mooring carriage (12B) upward while the furling carriage (12A) is kept fixed in place on the mooring mast (4);
- sliding the folding carriage (12C, 12D, 12E) upward while the mooring carriage (12B) is kept fixed in place on the mooring mast (4).
